# EUROPÄISCHE PATENTANMELDUNG

(11) **EP 4 470 381 A1**
(43) Veröffentlichungstag der Anmeldung: **04.12.2024**
(21) Anmeldenummer: 23176691.6
(22) Anmeldetag: 01.06.2023
(51) Int. Cl.: A23C 3/03, A23C 19/05, A23C 9/142, A23C 19/028, A23L 19/10

(54) **TEXTURIERTE MILCHPRODUKTE**

(71) Anmelder: DMK Deutsches Milchkontor GmbH, 27404 Zeven (DE)
(72) Erfinder: DÖRING, Sven-Rainer, 27404 Zeven (DE); Steffens, Marco, 27404 Elsdorf (DE)
(74) Vertreter: Fabry, Bernd

(57) **Zusammenfassung**

Vorgeschlagen werden texturierte Milchprodukte, erhältlich oder erhalten durch die folgenden Schritte:
(a) Bereitstellung von Magermilch;
(b) Mikro- und/oder Ultrafiltration der Magermilch aus Schritt (a) unter Erhalt eines Permeats P1 und eines Retentats R1;
(c) Erhitzen des Retentats R1; sowie
(d) Zugabe von Hilfs- und Zusatzstoffen.

Die Produkte zeichnen sich durch eine cremig-feste Konsistenz aus und sind frei von Verdickungsmitteln, insbesondere Hydrokolloide.

## Beschreibung

### GEBIET DER ERFINDUNG

Die vorliegende Erfindung befindet sich auf dem Gebiet der Lebensmitteltechnologie und betrifft texturierte Milchprodukte mit einer cremig-festen bzw. gelförmigen Textur.

### TECHNOLOGISCHER HINTERGRUND

Lebensmittel lassen sich nach einer Vielzahl von Parametern klassifizieren, wie beispielsweise Zusammensetzung, Nährwert, Geschmack, Funktion oder Herkunft. Ein besonders wichtiges Merkmal ist betrifft jedoch die Haptik der Produkte, insbesondere ihre Textur. Diese kann von pastös über cremig bis hin zu fest reichen und dabei auch noch einem Wechsel unterliegen, je nachdem welche Temperatur herrscht. Ein einfaches Beispiel ist Speiseeis, das bei niedrigen Temperaturen fest ist, aber im Gaumen schmilzt.

Zu den interessantesten Texturen gehören solche, die als cremig-fest oder gelförmig bezeichnet werden. Darunter versteht man Produkte, die in ihren Darreichungsformen fest sind, aber sehr leicht verstrichen werden können. Solche Produkte können süß sein, wie beispielsweise Pudding, oder aber auch herzhaft, wie beispielsweise Aioli. Um derartige Konsistenzen zu herzustellen, die sich vorzugsweise auch bei Lagerung im Kühlschrank nicht verändern, werden den Rezepturen regelmäßig Verdickungsmittel zugesetzt. Da diese für den Verzehr zugelassen sein müssen, handelt es sich dabei meistens um Hydrokolloide, wie beispielsweise Stärke, Cellulose, Gummi Arabicum, Agar, Alginate oder Gelatine. Durch ihre Molekülgröße und intermolekulare Wechselwirkung sind Hydrokolloide in der Lage, die Viskosität einer Lösung zu erhöhen. Das Ausmaß der Viskositätserhöhung hängt dabei wesentlich von der Konzentration und der chemischen Natur des Hydrokolloids ab.

Im Markt beobachtet man jedoch ein zunehmendes Interesse an Produkten, die frei von Verdickungsmitteln sind. Als tierisches Produkt steht Gelatine in besonderer Kritik, aber auch rein pflanzliche Hydrokolloide wie beispielsweise Alginate haben Nachteile, nämlich einen bitteren Nachgeschmack und die Tendenz, bei manchen Konsumenten Durchfall und Übelkeit hervorzurufen.

### STAND DER TECHNIK

US 2004 161 519 A1 (WALSH) offenbart texturierte Molkenproteine als Fleischersatz, die durch Extrusion von Molkenproteinen zusammen mit Kohlenhydraten erhalten werden. In den Beispielen 9 bis 11 wird mit Verweis auf Beispiel 1 beschrieben, wie eine Mischung aus WPC80 und Sojaprotein unter Zugabe von Kornstärke in einem Doppelschneckenextruder mit Wasser texturiert werden. Die Temperatur am Ausgang des Extruders beträgt 150 °C, das Verfahren verläuft offenbar drucklos. Anschließend wird das extrudierte Material getrocknet und zu einem Pulver vermahlen.

US 2004 253 363 A1 (NAKANO) hat Fleischersatzstoffe zum Gegenstand, wobei diese durch Extrusion von Mischungen aus Pflanzen- und Molkenproteinen erhalten werden. Beispiel 1 beschreibt, wie eine Mischung aus Sojabohnenpulver und Proteinkonzentrat zusammen mit Wasser in einen Extruder gegeben werden.

US 2009 263 553 A1 (LICKER) offenbart texturierte Milchproteine, die dadurch erhalten werden, dass man eine Mischung aus 35 Gew.-% Caseinat und 5 Gew.-% Fasern bei einem Wassergehalt von 28 bis 34 Gew.-% extrudiert. Das Verfahren wird bei einem Temperaturgradienten von 23-43 °C auf 65 bis 163 °C bei einem Druck von 68 bis 96 bar durchgeführt. Anschließend werden die Extrudate entspannt und geschnitten.

US 2009 263 565 A1 (RYDER) betrifft die Herstellung von texturierten Proteinmassen, die im Wesentlichen auf pflanzlichen Proteinen und Gluten beruhen.

EP 3180987 A1 (DMK) schlägt texturierte Milchproteine vor, die dadurch erhältlich sind, dass man (a) eine Mischung enthaltend oder bestehend aus Milchproteinen und einem Fasermaterial bereitstellt; die Mischung in Gegenwart von Wasser oder Molke unter autogenem Druck und unter Anlegen eines Temperaturgradienten von etwa 20 bis etwa 200 °C extrudiert und (c) das Extrudat anschließend entspannt. DE 202016104532 U1 DE 202016104535 U1 DE 202016104536 U1 (DMK) beschreiben die Verwendung dieser Produkte als Ersatzstoffe für Kohlenhydrate und Proteinquelle in Nahrungsmitteln.

### AUFGABE DER ERFINDUNG

Daher hat die Aufgabe der vorliegenden Erfindung darin bestanden, Lebensmittel auf Basis Milch zur Verfügung zu stellen, die eine cremig-feste bzw. gelförmige Textur aufweisen, diese über einen breiten Temperaturbereich behalten und dabei frei von Verdickungsmitteln, insbesondere von Hydrokolloiden sind.

### BESCHREIBUNG DER ERFINDUNG

Ein erster Gegenstand der Erfindung betrifft Texturierte Milchprodukte, dadurch erhältlich oder erhalten durch die folgenden Schritte:
(a) Bereitstellung von Magermilch;
(b) Mikro- und/oder Ultrafiltration der Magermilch aus Schritt (a) unter Erhalt eines Permeats P1 und eines Retentats R1;
(c) Erhitzen des Retentats R1; sowie gegebenenfalls
(d) Zugabe von Hilfs- und Zusatzstoffen.
Überraschenderweise wurde gefunden, dass durch Weiterverarbeitung des Retentats aus der Ultrafiltration von Magermilch Produkte erhalten werden, die eine über einen breiten Temperaturbereich cremig-feste bzw. gelförmige Konsistenz aufweisen, ohne dass es der Zugabe von Verdickungsmitteln, speziell von Hydrokolloiden bedarf,

Ein weiterer Gegenstand der Erfindung betrifft ein Verfahren zur Herstellung von texturierten Milchprodukten, umfassend oder bestehend aus den folgenden Schritten:
(a) Bereitstellung von Magermilch;
(b) Mikro- und/oder Ultrafiltration der Magermilch aus Schritt (a) unter Erhalt eines Permeats P1 und eines Retentats R1;
(c) Erhitzen des Retentats R1; sowie gegebenenfalls
(d) Zugabe von Hilfs- und Zusatzstoffen.

### Einsatzstoffe

Die erfindungsgemäßen texturierten Milchprodukte stellen Magermilchprodukte dar, sind also per Definition Kuhmilchprodukte. Magermilch wird aus Vollmilch durch Abtrennung des Rahms erhalten. Auf diese Weise wird der Fettgehalt von etwa 4 Gew.-% auf unter 0,5 Gew.-% gebracht. Weiterhin enthält Magermilch etwa 3,5 Gew.-% Proteine. Die Abtrennung von Feststoffen sowie die Entrahmung erfolgen üblicherweise in einem Separator. Derartige Bauteile sind aus dem Stand der Technik hinreichend bekannt. In der Milchindustrie sehr verbreitet sind Separatoren der Firma GEA Westfalia Separator GmbH, mit denen die Feststoffabtrennung einzeln oder gemeinsam durchgeführt werden können (http://www.westfalia-separator.com/de/anwendungen/molkereitechnik/milch-molke.html). Bevorzugte Kaltmilchseparatoren werden von diesem Hersteller unter der Bezeichnung "ProCool" angeboten. Entsprechende Bauteile sind beispielsweise auch in der DE 10036085 C1 und der DE 10361526 B3 (Westfalia) beschrieben und dem Fachmann bestens bekannt, so dass es zur Durchführung dieser Verfahrensschritte keiner Erläuterungen bedarf, da sie dem allgemeinen Fachwissen zuzurechnen sind.

Ein weiterer Verarbeitungsschritt bei der Herstellung von Magermilch ist üblicherweise die Pasteurisierung, bei der die Milch kurzzeitig in Wärmeaustauschern erhitzt und die enthaltenen Keime abgetötet werden. An den Wärmeaustauschern liegt ein Temperaturgradient an, der so gewählt ist, dass das Produkt für eine Verweilzeit von mindestens 20 und höchstens 60 Sekunden, vorzugsweise etwa 30 Sekunden auf eine Temperatur von etwa 70 bis 80 °C und insbesondere etwa 72 bis 74 °C erhitzt wird.

Anstelle der Magermilch können auch Konzentrate eingesetzt werden. In diesem Fall wird die Magermilch vor der Ultrafiltration einem Konzentrierungsschritt unterworfen. Die Konzentrate werden aus Magermilch durch Entzug von Wasser erhalten und weisen dann Feststoffgehalte von etwa 30 bis etwa 40 Gew.-% und insbesondere von etwa 35 Gew.-% auf.

### Mikro- oder Diafiltration

Die Mikro- oder Diafiltration gehört zu den Membrantrennverfahren. Der wesentliche Unterschied zu Ultra- und Nanofiltration besteht in den verschiedenen Porengrößen und in der unterschiedlichen Membranstruktur wie den Werkstoffen und den beteiligten Filtermaterialien. Eine Filtration durch Membranen mit einer Porengröße < 0,1 µm wird in der Regel Nano- oder Ultrafiltration genannt, während die Filtration bei Porengrößen > 0,1 µm, speziell von etwa 0,1 bis 1 µm, gewöhnlich als Mikro- oder Diafiltration bezeichnet wird. In beiden Fällen handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 10 bar liegt. Der Werkstoff der Filterfläche kann je Einsatzgebiet aus Edelstahl, Kunststoff, Keramik oder textilen Gewebe bestehen. Es gibt verschiedene Erscheinungsformen der Filterelemente: Kerzenfilter, Flachmembranen, Spiralwickelmodule, Taschenfilter und Hohlfasermodule, die im Sinne der vorliegenden Erfindung alle grundsätzlich geeignet sind. Vorzugsweise wird die Filtration mit Membranen durchgeführt, die einen Porendurchmesser von etwa 50.000 bis etwa 100.000 Dalton aufweisen.

### Ultrafiltration

Man unterscheidet Mikrofiltration, Ultrafiltration und Nanofiltration über den Grad der Abtrennung. Liegt die Ausschlussgrenze (oder auch "*Cut-off*") bei 100 nm oder darüber, spricht man von Mikrofiltration. Liegt die Ausschlussgrenze in dem Bereich zwischen 2-100 nm, bezeichnet man dies als Ultrafiltration. Bei der Nanofiltration liegt die Ausschlussgrenze unterhalb von 2 nm. In jedem dieser Fälle handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der bei Ultra- und Mikrofiltration zwischen 0,1 und 10 bar und bei der Nanofiltration bis ca. 40 bar liegt.

Die Ausschlussgrenzen von Ultrafiltrationsmembranen werden auch in Form des *NMWC* (englisch: Nominal Molecular Weight Cut-Off, auch *MWCO,* Molecular Weight Cut Off, Einheit: Dalton) angegeben. Er ist definiert als die minimale Molekülmasse globulärer Moleküle, welche durch die Membran zu 90% zurückgehalten werden. In der Praxis sollte der NMWC mindestens 20 % niedriger sein als die Molmasse des abzutrennenden Moleküls. Weitere qualitative Aussagen über die Filtration lassen sich anhand des *Flux* (Wasserwert) (Transmembranfluss oder Durchtrittsrate) machen. Dieser verhält sich im Idealfall proportional zum Transmembrandruck und reziprok zum Membranwiderstand. Diese Größen werden sowohl von den Eigenschaften der verwendeten Membran als auch durch Konzentrationspolarisation und eventuell auftretendes Fouling bestimmt. Die Durchtrittsrate wird auf 1 m² Membranfläche bezogen. Ihre Einheit ist l/(m²h bar).

Für die Ultrafiltration haben sich Membranen als besonders geeignet erwiesen, die einen Porendurchmesser im Bereich von etwa 1.000 bis etwa 50.000 und vorzugsweise etwa 5.000 bis etwa 25.000 Dalton besitzen.

Der Werkstoff der Filterfläche kann Edelstahl, Polymerwerkstoffen, Keramik, Aluminiumoxid oder textilen Gewebe darstellen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind. Vorzugsweise werden jedoch Spiralwickelmembranen aus Polymerwerkstoffen oder Kerzenfilter aus Keramik oder Aluminiumoxid eingesetzt, wobei sich die erste Ausführungsform für Ultra- und Nanofiltration und die zweite für die Mikrofiltration besonders bevorzugt erwiesen hat.

Alle genannten Filtrationsverfahren können im Sinne der vorliegenden Erfindung unabhängig voneinander "heiß" oder "kalt", d.h. im Temperaturbereich von etwa 10 bis etwa 60 °C durchgeführt werden. Bevorzugt ist es jedoch, bei Temperaturen im niedrigen Bereich von etwa 10 bis etwa 20 °C zu arbeiten.

### Enzymzugabe

Optional kann man dem Retentat R2 vor der Entkeimung mindestens eine beta-Galactosidase zusetzen und damit das Retentat einer enzymatischen Transgalactosilierung zu unterwerfen. Hierunter versteht man die Übertragung von Galactoseeinheiten unter Aufbau eines oligomeren Zuckers. Als geeignete Enzyme kommen solche aus *Aspergillus oryzae, Bacillus circulans* oder Mischungen von beiden in Betracht. *Aspergillus oryzae,* richtiger *Aspergillus flavus* var. *Oryzae* ist ein Schimmelpilz (Gießkannenschimmel), der in der japanischen Küche eine große Rolle spielt. Er ist der wichtigste unter den Köji-Pilzen Er wird vor allem benutzt, um Soja in Feststoff-Bioreaktoren zu fermentieren und so Miso und Sojasauce zu erzeugen. *Bacillus circulans* ist eine Bakterienspezies, die sich zirkulär auf Nährmedien ausbreitet, woher auch ihr Namen stammt. Es handelt sich um anaerob wachsende, Gram variable stäbchenförmige, bewegliche Zellen, die 0,5 bis 1 µm breit und 3,5 µm lang sind. Das Bakterium fermentiert Pentosen, Hexosen, Hexitole und Disaccharide. *Bacillus circulans* kommt im Darm von pflanzenfressenden Fischen vor und unterstützt dort durch die Ausscheidung von Cellulasen die Verdauung.

Wie alle Enzyme weisen auch die β-Galactosidasen ein vergleichsweise enges Temperatur- und pH-Wertintervall auf, in dem sie ihre optimale Leistung entfalten; diese sind dem Fachmann notorisch bekannt. Mit *Aspergillus oryzae* wird die Reaktion daher vorzugsweise bei einer Temperatur im Bereich von etwa 50 bis etwa 60 °C und einem pH-Wert von etwa 4 bis etwa 5, bei Zugabe von Enzymen aus *Bacillus circulans* bei einer Temperatur im Bereich von etwa 45 bis etwa 55 °C und einem pH-Wert von etwa 5,5 bis etwa 6,5 durchführt. Bei Einsatz von *Aspergillus oryzae* wird daher auch von einem *"sauren Verfahren",* bei *Bacillus circulans* von einem *"neutralen Verfahren"* gesprochen. Eine Besonderheit bei der grundsätzlichen Bildung von Galactooligosacchariden besteht darin, dass sich der Kettenaufbau nicht stetig fortsetzt, sondern nach einer Zeit an Geschwindigkeit verliert, bis sogar die Konkurrenzreaktion, nämlich die Rückspaltung der GOS überwiegt. Es hat sich daher als vorteilhaft erwiesen, der enzymabhängigen Reaktionskinetik Rechnung zu tragen und die Transgalactosilierung über einen Zeitraum von etwa 30 bis etwa 120 min und insbesondere von etwa 60 bis etwa 90 min durchzuführen. Dabei gilt, dass hohe initiale Lactosekonzentrationen die Hydrolyseneigung deutlich vermindern und niedrige Enzymkonzentration die Hydrolyse ebenfalls verzögern.

Die Zugabe von beta-Galactosidasen ist insbesondere dann für den Aufbau einer ausreichend hohen Viskosität sinnvoll, wenn der Proteingehalt in der Trockenmasse des Retentats R1 kleiner oder gleich 15 Gew.-% beträgt.

### Erhitzen/Entkeimung

Das Retentat - gegebenenfalls nach Zugabe der beta-Galactosidasen und der anschließenden Transgalactosilierung - wird anschließend erhitzt. Der Temperatureintrag ist dabei bestimmend für die resultierende Textur. Es gilt die Faustregel, dass die Textur mit steigender Temperatur härter wird.

Gleichzeitig findet mit dem Erhitzen eine Entkeimung statt. Darunter ist jeder Prozess zu verstehen, mit dem sich die Keimlast des Ausgangsproduktes auf einen Wert vermindern lässt, der unter dem liegt, den die jeweiligen nationalen Prüfstellen als Schwelle für die Zulassung als Lebensmittel festgelegt haben. In der Regel werden die wässrigen Zusammensetzungen auf unter 1.000 Keime/mL entkeimt, vorzugsweise auf unter 500 Keime/mL und insbesondere etwa 10 bis etwa 50 Keime/mL.

Die bevorzugte Erhitzens-/Entkeimungsmethode ist eine Hochtemperaturbehandlung, bei der die wässrigen Zusammensetzungen einer Temperatur im Bereich von etwa 70 bis etwa 150 °C, vorzugsweise etwa 80 bis etwa 100 °C über etwa 10 Sekunden bis etwa 10 Minuten und insbesondere etwa 20 Sekunden bis etwa 5 Minuten.

### Konfektionierung

Das nach der Entkeimung erhaltene Produkt weist eine cremig-feste bis gelartige Konsistenz auf und kann in dieser Form unmittelbar abgefüllt werden. Dieser nachfolgende Konfektionierungsschritt kann in der Kälte bei etwa 5 bis etwa 21 °C oder vorzugsweise in der Wärme bei etwa 25 bis etwa 35°C durchgeführt werden. Gegebenenfalls können die texturierten Milchprodukte noch mit weiteren Zusatzstoffen vermischt und das Endprodukt in die entsprechenden Verpackungen abgefüllt werden.

### HILFS- UND ZUSATZSTOFFE

Die erfindungsgemäßen Süßspeisen können weiterhin Hilfs- und Zusatzstoffe enthalten, die ausgewählt sind aus der Gruppe, die gebildet wird von pflanzlichen Proteinen, pflanzlichen Fetten, Stärkeprodukten, Ballaststoffen, Aromastoffen, Prebiotika, Probiotika, Genusssäuren, Lab, Salzen und Farbstoffen sowie deren Gemischen.

### Pflanzliche Proteine

Pflanzliche Proteine im Sinne der Erfindung können aus Kartoffeln, Soja, Erbsen, Lupinen, Raps oder anderen proteinreichen Früchten wie z. B. Sonnenblumen- oder Kürbiskernen u. a. m. gewonnen werden. Die geernteten proteinhaltigen Früchte werden mechanisch zerkleinert und entfettet. Es entstehen Flocken oder ein proteinreiches Pulver. Anschließend wird unter Verwendung von Lösungsmitteln ein Proteinkonzentrat gewonnen, das ggf. weiter zu Proteinisolat gereinigt und aufkonzentriert wird: Die Flocken oder Mehl werden mit Wasser versetzt und angemaischt. Die proteinarmen Fasern und Feststoffe werden im nächsten Schritt mit Hilfe von Industriezentrifugen von der proteinreichen Lösung abgetrennt. Dann folgt die sogenannte Ausfällung. Hier wird der pH-Wert der proteinreichen Lösung auf den isoelektrischen Punkt eingestellt. Dadurch setzen sich die Proteinpartikel ab. Diese werden dann wiederum mittels Zentrifugen von der Lauge abgetrennt. Um alle Bestandteile der Mutterlauge aus dem ausgefällten und abgetrennten Protein zu entfernen, wird das Protein erneut mit Wasser versetzt und wieder mit Hilfe der Zentrifugalkraft abgetrennt. Bei einer Trockenextrusion wird unter Zuführung von Wärme, Druck und Hilfsstoffen ein Zwischenprodukt mit niedrigem Wassergehalt erzeugt. Diese ebenfalls geeigneten Proteine werden als TVP (Texturized Vegetable Protein) bezeichnet und haben eine trockene Konsistenz in Form von Körnern, Streifen oder Flocken. Bei einer Nassextrusion wird alternativ mit einem höheren Wassergehalt operiert. Die Feuchtigkeit des Zwischenproduktes liegt daher näher am Wassergehalt des Endproduktes. Das Zwischenprodukt wird als HMMA (High Moistured Meat Analogues) bezeichnet.

### Pflanzliche Fette

Pflanzenfette stelle Lipide dar, die im Wesentlichen gesättigte Fettsäuren enthalten und daher bei Umgebungstemperatur fest vorliegen. Zu den festen Pflanzenfetten zählen vor allem Kokosfett, Palmfett, Palmkernfett und Sheabutter.

### Stärkeprodukte

Im Sinne der vorliegenden Erfindungen umfasst der Begriff Stärkeprodukte, (Komponente c3) bilden natürliche Stärken ebenso wie chemisch oder enzymatisch modifizierte Stärken, sofern diese für die menschliche Ernährung zugelassen sind sowie Dextrine.

**Kartoffelstärke.** Kartoffeln enthalten etwa 75 % Wasser, 21 % Stärke und 4 % andere Substanzen. Zur Herstellung von Kartoffelstärke werden sie traditionell auf schnell rotierenden, mit Sägezähnen besetzten Zylindern unter Zufluss von Wasser möglichst fein zerrieben. Daraufhin wäscht man den Brei, in welchem die Zellen möglichst vollständig zerrissen, die Stärkekörner also bloßgelegt sein sollten, aus einem Metallsieb, auf dem Bürsten langsam rotieren, mit Wasser aus. Bei größeren Betrieben benutzt man kontinuierlich wirkende Apparate, bei denen der Brei durch eine Kette allmählich über ein langes, geneigt liegendes Sieb transportiert und dabei ausgewaschen und das auf den schon fast erschöpften Brei fließende Wasser, welches also nur sehr wenig Stärkemehl aufnimmt, auch noch auf frischen Brei geleitet wird. Der ausgewaschene Brei (Pülpe) enthält 80-95 % Wasser, in der Trockensubstanz aber noch etwa 60 % Stärke und dient als Viehfutter, auch zur Stärkezucker-, Branntwein- und Papierherstellung; das Waschwasser hat man zum Berieseln der Wiesen benutzt, doch gelang es auch, die stickstoffhaltigen Bestandteile des Kartoffelfruchtwassers als Viehfutter zu verwerten. Da die Pülpe noch sehr viel Stärke enthält, zerreibt man sie zwischen Walzen, um alle Zellen zu öffnen, und wäscht sie noch einmal aus. Nach einer anderen Methode schneidet man die Kartoffeln in Scheiben, befreit sie durch Mazeration in Wasser von ihrem Saft und schichtet sie mit Reisigholz oder Horden zu Haufen, in welchen sie bei einer Temperatur von 30-40 °C in etwa acht Tagen vollständig verrotten und in eine lockere, breiartige Masse verwandelt werden, aus welcher die Stärke leicht ausgewaschen werden kann. Das von den Sieben abfließende Wasser enthält die Saftbestandteile der Kartoffeln gelöst und Stärke und feine Fasern, die durch das Sieb gegangen sind, suspendiert. Man rührt dieses Wasser in Bottichen auf, lässt es kurze Zeit stehen, damit Sand und kleine Steinchen zu Boden fallen können, lässt es dann durch ein feines Sieb fließen, um gröbere Fasern zurückzuhalten, und bringt es dann in einen Bottich, in welchem sich die Stärke und auf ihr die Faser ablagert. Die obere Schicht des Bodensatzes wird deshalb nach dem Ablassen des Wassers entfernt und als Schlammstärke direkt verwertet oder weiter gereinigt, indem man sie auf einem Schüttelsieb aus feiner Seidengaze, durch deren Maschen die Stärke, aber nicht die Fasern hindurchgehen, mit viel Wasser auswäscht. Die Hauptmasse der Stärke wird im Bottich wiederholt mit reinem Wasser angerührt und nach jedesmaligem Absetzen von der oberen unreinen Stärke befreit. Man kann auch die rohe Stärke mit Wasser durch eine sehr schwach geneigte Rinne fließen lassen, in deren oberem Teil sich die schwere reine Stärke ablagert, während die leichteren Fasern von dem Wasser weiter fortgeführt werden.

Oft benutzt man auch Zentrifugalmaschinen, in welchen sich die schwere Stärke zunächst an der senkrechten Wand der schnell rotierenden Siebtrommel ablagert, während die leichte Faser noch im Wasser suspendiert bleibt. Das Wasser aber entweicht durch die Siebwand, und man kann schließlich die Stärke aus der Zentrifugalmaschine in festen Blöcken herausheben, deren innere Schicht die Faser bildet. Die feuchte (grüne) Stärke, welche etwa 33-45 % Wasser enthält, wird ohne weiteres zu Traubenzucker verarbeitet, für alle anderen Zwecke aber auf Filterpressen oder auf Platten aus gebranntem Gips, die begierig Wasser einsaugen, auch unter Anwendung der Luftpumpe entwässert und bei einer Temperatur unter 60 °C getrocknet. Man bringt sie in Brocken oder, zwischen Walzen zerdrückt und gesiebt, als Mehl in den Handel. Bisweilen wird die feuchte Stärke mit etwas Kleister angeknetet und durch eine durchlöcherte eiserne Platte getrieben, worauf man die erhaltenen Stängel auf Horden trocknet. Um einen gelblichen Ton der Stärke zu verdecken, setzt man ihr vor dem letzten Waschen etwas Ultramarin zu.

**Weizenstärke.** Weizenstärke wird aus weißem, dünnhülsigem, mehligem Weizen hergestellt. Dieser enthält etwa 58-64 % Stärke, außerdem etwa 10 % Kleber und 3-4 % Zellstoff, welcher hauptsächlich die Hülsen des Korns bildet. Die Eigenschaften des Klebers bedingen die Abweichungen der Weizenstärkefabrikation von der Gewinnung der Stärke aus Kartoffeln. Nach dem traditionellen Halleschen oder Sauerverfahren weicht man den Weizen in Wasser, zerquetscht ihn zwischen Walzen und überlässt ihn, mit Wasser übergossen, der Gärung, die durch Sauerwasser aus einem früheren Prozess eingeleitet wird und Essig- und Milchsäure liefert, in welcher sich der Kleber löst oder wenigstens seine zähe Beschaffenheit so weit verliert, dass man nach 10-20 Tagen in einer siebartig durchlöcherten Waschtrommel die Stärke abscheiden kann. Das aus der Trommel abfließende Wasser setzt in einem Bottich zunächst Stärke, dann eine innige Mischung von Stärke mit Kleber und Hülsenteilchen (Schlichte, Schlammstärke), zuletzt eine schlammige, vorwiegend aus Kleber bestehende Masse ab. Diese Rohstärke wird ähnlich wie die Kartoffelstärke gereinigt und dann getrocknet, wobei sie zu Pulver zerfällt oder, wenn sie noch geringe Mengen Kleber enthält, die so genannte Strahlenstärke liefert, die von den Normalverbrauchern irrtümlich für besonders reingehalten wird.

Nach dem traditionellen Elsässer Verfahren wird der gequollene Weizen durch aufrechte Mühlsteine unter starkem Wasserzufluss zerquetscht und sofort ausgewaschen. Das abfließende Wasser enthält neben Stärke viel Kleber und Hülsenteilchen und wird entweder der Gärung überlassen und dann wie beim vorigen Verfahren weiterverarbeitet, oder direkt in Zentrifugalmaschinen gebracht, wo viel Kleber abgeschieden und eine Rohstärke erhalten wird, die man durch Gärung etc. weiter reinigt. Die bei diesem Verfahren erhaltenen Rückstände besitzen beträchtlich höheren landwirtschaftlichen Wert als die bei dem Halleschen Verfahren entstehenden. Will man aber den Kleber noch vorteilhafter verwerten, so macht man aus Weizenmehl einen festen, zähen Teig und bearbeitet diesen nach etwa einer Stunde in Stücken von 1 kg in einem rinnenförmigen Trog unter Zufluss von Wasser mit einer leicht kannelierten Walze. Hierbei wird die Stärke aus dem Kleber ausgewaschen und fließt mit dem Wasser ab, während der Kleber als zähe, fadenziehende Masse zurückbleibt.

**Reisstärke.** Reis enthält 70-75 % Stärke neben 7-9 % unlöslichen, eiweißartigen Stoffen, die aber durch Einweichen des Reises in ganz schwacher Natronlauge größtenteils gelöst werden. Man zerreibt den Reis dann in einer Mühle unter beständigem Zufluss schwacher Lauge, behandelt den Brei in einem Bottich anhaltend mit Lauge und Wasser, lässt kurze Zeit absetzen, damit sich gröbere Teile zu Boden senken, und zieht das Wasser, in welchem reine Stärke suspendiert ist, ab. Aus dem Bodensatz wird die Stärke in einem rotierenden Siebzylinder durch Wasser ausgewaschen, worauf man sie durch Behandeln mit Lauge und Abschlämmen vom Kleber befreit. Die zuerst erhaltene reinere Stärke lässt man absetzen, entfernt die obere unreine Schicht, behandelt das Übrige auf der Zentrifugalmaschine und trocknet die reine Stärke.

**Maisstärke.** Mais weicht man vier- bis fünfmal je 24 Stunden in Wasser von 35 °C, wäscht ihn und lässt ihn dann durch zwei Mahlgänge gehen. Das Mehl fällt in eine mit Wasser gefüllte Kufe mit Flügelrührer und gelangt aus dieser auf Seidengewebe, das nur die grobe Kleie zurückhält. Das mit der Stärke beladene, durch das Gewebe hindurchgegangene Wasser gelangt in Tröge, dann durch zwei feine Gewebe und endlich auf wenig geneigte, 80-100 m lange Schiefertafeln, auf welchen sich die Stärke ablagert. Das abfließende, nur noch Spuren von Stärke enthaltende Wasser lässt man stehen und presst den Absatz zu Kuchen, um ihn als Viehfutter zu verwenden. Besonders bevorzugt ist der Einsatz von Reisstärke oder Maisstärke.

**Dextrine.** Bei Dextrinen bzw. Maltodextrinen handelt es sich um Stärkeabbauprodukte, die von ihrer Molekülgröße her zwischen Oligosacchariden und Stärke liegen. Üblicherweise kommen sie in Form von weißem bzw. hellgelbem Pulver vor. Sie werden hauptsächlich aus Weizen-, Kartoffel-, Tapioka- und Maisstärke durch trockenes Erhitzen (>150 °C) oder unter Säureeinwirkung gewonnen. In der Natur wird Dextrin zum Beispiel von *Bacterium macerans* erzeugt. Dextrine entstehen auch durch den enzymatischen Abbau von Stärke durch Amylase können. Bevorzugt sind Dextrine mit 5 bis 20 und insbesondere 6 bis 10 Dextrose-Äquivalenten (DE-Einheiten).

### Ballaststoffe

Ballaststoffe sind weitgehend unverdauliche Nahrungsbestandteile, meistens Kohlenhydrate, welche meistens in pflanzlichen Lebensmitteln vorkommen und ein wichtiger Bestandteil der menschlichen Ernährung sind. In wiederum einer weiteren bevorzugten Ausführungsform der vorliegenden Erfindung ist der Ballaststoff ausgewählt aus der Gruppe bestehend aus Inulin, Johannisbrotkernmehl, Pektin, Dextrin, Maltodextrin, Cellulose, Lignin und Alginat oder Mischungen davon.

### Emulgatoren

Emulgatoren zeichnen sich durch die wichtige Eigenschaft aus, sowohl in Wasser als auch in Fett löslich zu sein. Emulgatoren bestehen meist aus einem fettlöslichen und einem wasserlöslichen Teil. Sie kommen immer dann zum Einsatz, wenn Wasser und Öl zu einer beständigen, homogenen Vermischung gebracht werden sollen. Geeignete Emulgatoren, die in der lebensmittelverarbeitenden Industrie verwendet werden sind ausgewählt aus: Ascorbylpalmitat (E 304) Lezithin (E 322) Phosphorsäure (E 338) Natriumphosphat (E 339) Kaliumphosphat (E 340) Kalziumphosphat (E 341) Magnesiumorthophosphat (E 343) Propylenglykolalginat (E 405) Polyoxyethylen(8)stearat (E 430) Polyoxyethylenstearat (E 431) Ammoniumphosphatide (E 442) Natriumphosphat und Kaliumphosphat (E 450) Natriumsalze der Speisefettsäuren (E 470 a) Mono- und Diglyceride von Speisefettsäuren (E 471) Essigsäuremonoglyceride (E 472 a) Milchsäuremonoglyceride (E 472 b) Zitronensäuremonoglyceride (E 472 c) Weinsäuremonoglyceride (E 472 d) Diacetylweinsäuremonoglyceride (E 472 e) Zuckerester von Speisefettsäuren (E 473) Zuckerglyceride (E 474) Polyglyceride von Speisefettsäuren (E 475) Polyglycerin-Polyricinoleat (E 476) Propylenglykolester von Speisefettsäuren (E 477) Natriumstearoyllaktylat (E 481) Calciumstearoyl-2-lactylat (E 482) Stearyltartrat (E 483) Sorbitanmonostearat (E 491) Stearinsäure (E 570).

### Aromastoffe

Die erfindungsgemäßen Lebensmittel können einen oder mehrere Aromastoffe enthalten. Typische Beispiele umfassen: Acetophenon, Allylcapronat, alpha-lonon, beta-Ionon, Anisaldehyd, Anisylacetat, Anisylformiat, Benzaldehyd, Benzothiazol, Benzylacetat, Benzylalkohol, Benzylbenzoat, beta-Ionon, Butylbutyrat, Butylcapronat, Butylidenphthalid, Carvon, Camphen, Caryophyllen, Cineol, Cinnamylacetat, Citral, Citronellol, Citronellal, Citronellylacetat, Cyclohexylacetat, Cymol, Damascon, Decalacton, Dihydrocumarin, Dimethylanthranilat, Dimethylanthranilat, Dodecalacton, Ethoxyethylacetat, Ethylbuttersäure, Ethylbutyrat, Ethylcaprinat, Ethylcapronat, Ethylcrotonat, Ethylfuraneol, Ethylguajakol, Ethylisobutyrat, Ethylisovalerianat, Ethyllactat, Ethylmethylbutyrat, Ethylpropionat, Eucalyptol, Eugenol, Ethylheptylat, 4-(p-Hydroxyphenyl)-2-butanon, gamma-Decalacton, Geraniol, Geranylacetat, Geranylacetat, Grapefruitaldehyd, Methyldihydrojasmonat (z.B. Hedion^{®}), Heliotropin, 2-Heptanon, 3-Heptanon, 4-Heptanon, trans-2-Heptenal, cis-4-Heptenal, trans-2-Hexenal, cis-3-Hexenol, trans-2-Hexen-säure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans-2,4-Nona-dienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinen, Terpineol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), 2,5-Dimethyl-4-hydroxy-3(2H)-furanon und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalacton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-De-cadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol sowie (hier nicht explizit genannte) Stereoisomere, Enantiomere, Stellungsisomere, Diastereomere, cis/trans-Isomere bzw. Epimere dieser Substanzen.

Die Aromastoffe können auch in fester oder pastöser Form, beispielsweise als getrocknete Würzmischungen oder kleingeschnittene Kräuter zugegeben werden.

### Genusssäuren

Der Begriff "Genusssäure" bezeichnet organische Säuren, Fruchtsäuren oder Phosphorsäuren, welche aufgrund ihres Geschmacks und anderer lebensmitteltechnisch vorteilhaften Eigenschaften als Zusatzstoffe, speziell als Lebensmittelsäuren oder Säureregulatoren in der Lebensmittelproduktion eingesetzt werden, wie beispielsweise:
- E 260 -: Essigsäure
- E 270 -: Milchsäure
- E 290 -: Kohlendioxid
- E 296 -: Apfelsäure
- E 297 -: Fumarsäure
- E 330 -: Citronensäure
- E 331 -: Natriumcitrat
- E 332 -: Kaliumcitrat
- E 333 -: Calciumcitrat
- E 334 -: Weinsäure
- E 335 -: Natriumtartrat
- E 336 -: Kaliumtartrat
- E 337 -: Natrium-Kaliumtartrat
- E 338 -: Phosphorsäure
- E 353 -: Metaweinsäure
- E 354 -: Calciumtartrat
- E 355 -: Adipinsäure
- E 363 -: Bernsteinsäure
- E 380 -: Triammoniumcitrat
- E 513 -: Schwefelsäure
- E 574 -: Gluconsäure
- E 575 -: Glucono-delta-Lacton

Vorzugsweise, im Rahmen der vorliegenden Erfindung, sind die Genusssäuren ausgewählt aus der Gruppe bestehen aus Milchsäure, Weinsäure, Essigsäure, Apfelsäure, Zitronensäure oder Fumarsäure. Auch wenn ein erfindungsgemäßes Lebensmittelprodukt solche Genusssäuren, die im Rahmen der vorliegenden Erfindung gegebenenfalls (auch) aufgrund ihres Geschmacks eingesetzt werden, enthalten kann, sind die Genusssäuren im Rahmen des vorliegenden Textes nicht dem "Aromastoff" im Sinne des Anspruchswortlauts zuzuordnen (für bevorzugt zu verwendende Aromastoffe s. unten). Solche (weiteren) Aromastoffe sind also stets zusätzlich enthalten.

### Süßstoffe

Die texturierten Milchprodukte können des Weiteren Süßstoffe enthalten. Da es sich um kalorienarme oder wenigstens kalorienreduzierte Lebensmittel handelt, ist es zwar möglich, zum Süßen konventionellen Zucker einzusetzen, es ist jedoch weniger bevorzugt. Stattdessen werden vorzugsweise pflanzliche Alternativen eingesetzt.

Als Süßstoffe oder süß schmeckende Zusatzstoffe kommen zunächst Kohlenhydrate und speziell Zucker in Frage, wie etwa Sucrose/Saccharose, Trehalose, Lactose, Maltose, Melizitose, Raffinose, Palatinose, Lactulose, D-Fructose, D-Glucose, D-Galactose, L-Rhamnose, D-Sorbose, D-Mannose, D-Tagatose, D-Arabinose, L-Arabinose, D-Ribose, D-Glycerinaldehyd, oder Maltodextrin. Ebenfalls geeignet sind pflanzliche Zubereitungen, die diese Stoffe enthalten, beispielsweise auf Basis von Zuckerrüben (Beta vulgaris ssp., Zuckerfraktionen, Zuckersirup, Melasse), Zuckerrohr (Saccharum officinarum ssp., Melasse, Zuckerrohrsirup), Ahornsirup (Acer ssp.) oder Agaven (Agavendicksaft).

In Betracht kommen auch
- synthetische, d.h. in der Regel enzymatisch hergestellte Stärke oder Zuckerhydrolysate (Invertzucker, Fructosesirup);
- Fruchtkonzentrate (z.B. auf Basis von Äpfeln oder Birnen);
- Zuckeralkohole (z.B. Erythritol, Threitol, Arabitol, Ribotol, Xylitol, Sorbitol, Mannitol, Dulcitol, Lactitol);
- Proteine (z.B. Miraculin, Monellin, Thaumatin, Curculin, Brazzein);
- Süßstoffe (z.B. Magap, Natriumcyclamat, Acesulfam K, Neohesperidin Dihydrochalcon, Saccharin Natriumsalz, Aspartam, Superaspartam, Neotam, Alitam, Sucralose, Stevioside, Rebaudioside, insbesondere A und D, Lugduname, Carrelame, Sucrononate, Sucrooctate, Monatin, Phenylodulcin);
- Süß schmeckende Aminosäuren (z.B. Glycin, D-Leucin, D-Threonin, D-Asparagin, D-Phenylalanin, D-tryptophn, L-Prolin);
- Weitere süß schmeckende niedermolekulare Substanzen, wie z.B. Hernandulcin, Dihydrochalconglykoside, Glycyrrhizin, Glycerrhetinsäure, ihre Derivate und Salze, Extrakte von Lakritz (Glycyrrhizza glabra ssp.), Lippia dulcis Extrakte, Momordica ssp. Extrakte oder
- Einzelsubstanzen wie z.B. Momordica grosvenori [Luo Han Guo] und die daraus gewonnenen Mogroside, Hydrangea dulcis oder Stevia ssp. (z.B. Stevia rebaudiana) sowie Rubus Extrakte.

### Antioxidantien und Vitamine

In einer weiteren Ausführungsform der vorliegenden Erfindung können die Produkte als weitere fakultative Gruppe von Zusatzstoffen Antioxidantien und/oder Vitamine enthalten.

In der Lebensmittelindustrie werden sowohl natürliche als auch künstliche Antioxidationsmittel verwendet. Natürliche und künstliche Antioxidantien unterscheiden sich in erster Linie dadurch, dass erstere natürlich in der Nahrung vorkommen und letztere künstlich hergestellt werden. So werden natürliche Antioxidationsmittel, so sie als Lebensmittelzusatzstoff eingesetzt werden sollen, beispielsweise aus Pflanzenölen gewonnen. Vitamin E - auch als Tocopherol bekannt - wird beispielsweise häufig aus Sojaöl hergestellt. Synthetische Antioxidantien wie das Propylgallat, das Octylgallat und das Dodecylgallat werden dagegen durch chemische Synthese gewonnen. Die Gallate können bei empfindlichen Personen Allergien auslösen. Weitere einsetzbare Antioxidantien in Zusammensetzungen der vorliegenden Erfindung sind: Schwefeldioxid, E 220 Sulfite Natriumsulfit, E 221 Natriumhydrogensulfit, E 222 Natriumdisulfit, E 223 Kaliumdisulfit, E 224 Kalziumsulfit, E 226 Kalziumhydrogensulfit, E 227 Kaliumhydrogensulfit, E 228 Milchsäure, E 270 Ascorbinsäure, E 300 Natrium-L-Ascorbat, E 301 Calcium-L-Ascorbat, E 302 Ascorbinsäureester, E 304 Tocopherol, E 306 Alpha-Tocopherol, E 307 Gamma-Tocopherol, E 308 Delta-Tocopherol, E 309 Propylgallat, E 310 Octygallat, E 311 Dodecylgallat, E 312 Isoascorbinsäure, E 315 Natriumisoascorbat, E 316 tertiär-Butylhydrochinon (TBHQ), E 319 Butylhydroxianisol, E 320 Butylhydroxitoluol, E 321 Lecithin, E 322 Citronensäure, E 330 Salze der Zitronensäure (E 331 & E 332) Natriumzitrat, E 331 Kaliumzitrat, E 332 Calcium-Dinatrium-EDTA, E 385 Diphosphate, E 450 Dinatriumdiphosphat, E 450a Trinatriumdiphosphat, E 450b Tetranatriumdiphosphat, E 450c Dikaliumdiphosphat, E 450d Trekaliumdiphosphat, E 450e Dikalziumdiphosphat, E 450f Kalziumdihydrogendiphosphst, E 450g Triphosphate, E 451 Pentanatriumtriphosphat, E 451a Pentakaliumtriphosphat, E 451b Polyphosphat, E 452 Natriumpolyphosphat, E 452a Kaliumpolyphosphat, E 452b Natriumkalziumpolyphosphat, E 452c Kalziumpolyphosphat, E 452d Zinn-II-Chlorid, E 512.

Vitamine verfügen über unterschiedlichste biochemische Wirkungsweisen. Einige wirken ähnlich wie Hormone und regulieren den Mineralmetabolismus (z.B. Vitamin D), oder wirken auf das Wachstum von Zellen und Gewebe sowie die Zelldifferenzierung (z.B. einige Formen des Vitamin A). Andere stellen Antioxidantien dar (z.B. Vitamin E und unter bestimmten Umständen auch Vitamin C). Die größte Zahl von Vitaminen (z.B. die B-Vitamine) stellen Vorstufen für enzymatische Co-Faktoren dar, die Enzyme dabei unterstützen, bestimmte Prozesse im Metabolismus zu katalysieren. In diesem Zusammenhang können Vitamin mitunter eng an die Enzyme gebunden sein, beispielsweise als Teil der prostetischen Gruppe: ein Beispiel hierfür ist Biotin, das ein Teil des Enzyms ist, welches für den Aufbau von Fettsäuren verantwortlich ist. Vitamine können andererseits auch weniger stark gebunden sein und dann als Co-Katalysatoren wirken, beispielsweise als Gruppen, die sich leicht abspalten lassen und chemische Gruppen oder Elektronen zwischen den Molekülen transportieren. So transportiert beispielsweise Folsäure Methyl-, Formyl- und Methylengruppen in die Zelle. Obwohl ihre Unterstützung in Enzym-Substrat-Reaktionen wohl bekannt ist, sind auch ihre übrigen Eigenschaften für den Körper von großer Bedeutung.

Im Rahmen der vorliegenden Erfindung kommen als Vitamine Stoffe in Betracht, die ausgewählt sind aus der Gruppe bestehend aus
- Vitamin A (Retinol, Retinal, Betakarotin),
- Vitamin B₁ (Thiamin),
- Vitamin B₂ (Rioflavin),
- Vitamin B₃ (Niacin, Niacinamid),
- Vitamin B₅ (Panthothensäure),
- Vitamin B₆ (Pyridoxin, Pyridoxamin, Paridoxal),
- Vitamin B₇ (Biotin),
- Vitamin B₉ (Folsäure, Folinsäure),
- Vitamin B₁₂ (Cyanobalamin, Hydroxycobalmin, Methylcobalmin),
- Vitamin C (Ascorbinsäure),
- Vitamin D (Cholecalciferol),
- Vitamin E (Tocopherole, Tocotrienole) und
- Vitamin K (Phyllolchinon, Menachinon).
Die bevorzugten Vitamine sind neben der Ascorbinsäure die Gruppe der Tocopherole.

### Salze

Als Salze kommen Natriumchlorid, Magnesiumchlorid und Kaliumchlorid in Frage.

### Lebensmittelfarbstoffe

Lebensmittelfarbstoffe oder kurz Farbstoffe sind Lebensmittelzusatzstoffe zum Färben von Lebensmittel. Farbstoffe werden in die Gruppen der natürlichen Farbstoffe und synthetischen Farbstoffe unterteilt. Die naturidentischen Farbstoffe sind ebenfalls synthetischen Ursprungs. Die naturidentischen Farbstoffe sind synthetische Nachbildungen von in der Natur vorkommenden, färbenden Substanzen. Geeignete Farbstoffe für den Einsatz in der vorliegenden Zusammensetzung sind ausgewählt aus: Kurkumin, E 100 Riboflavin, Lactoflavin, Laktoflavin, Vitamin B2, E 101 Tartrazin, E 102 Chinolingelb, E 104 Gelborange S, Gelborange RGL, E 110 Cochenille, Karminsäure, echtes Karmin, E 120 Azorubin, Carmoisin, E 122 Amaranth, E 123 Cochenillerot A, Ponceau 4 R, Victoriascharlach 4 R, E 124 Erythrosin, E 127 Allurarot AC, E 129 Patentblau V, E 131 Indigotin, Indigo-Karmin, E 132 Brillantblau FCF, Patentblau AE, Amidoblau AE, E 133 Chlorophylle, Chlorophylline, E 140 Kupferkomplexe der Chlorophylle, Kupfer-Chlorophyllin-Komple, E 141 Brillantsäuregrün, Grün S, E 142 Zuckerkulör, Zuckercouleur, E 150 a Sulfitlaugen-Zuckerkulör, E 150 b Ammoniak-Zuckerkulör, E 150 c Ammoniumsulfit-Zuckerkulör, E 150 d Brillantschwarz FCF, Brillantschwarz PN, Schwarz PN, E 151 Pflanzenkohle, E 153 Braun FK, E 154 Braun HT, E 155 Carotin, Karotin, E 160 a Annatto, Bixin, Norbixin, E 160 b Capsanthin, Capsorubin, E 160 c Lycopin, E 160 d Beta-apo-8'-Carotinal, Apocarotinal, Beta-Apocarotinal, E 160 e Beta-apo-8'-Carotinsäure-Ethylester (C30), Apocarotinester, Beta-Carotinsäureester, E 160 f Lutein, Xanthophyll, E 161 b Canthaxanthin, E 161 g Betanin, Betenrot, E 162 Anthocyane, E 163 Calciumcarbonat, E 170 Titandioxid, E 171 Eisenoxide, Eisenhydroxide, E 172 Aluminium, E 173 Silber, E 174 Gold, E 175 Litholrubin BK, Rubinpigment BK, E 180.

Die erfindungsgemäßen Produkte können - insbesondere, wenn es sich um Süßspeisen handelt - weiterhin in stückiger oder feinverteilter Form Schokolade, Kakao, Nüsse oder Früchte enthalten.

Vorzugsweise handelt es sich bei den erfindungsgemäßen texturierten Milchprodukten um Quarkspeisen, Joghurtprodukte, Kefirprodukte oder Puddings (einschließlich solchen in Form von Mousse). Die Süßspeisen zeichnen sich ferner dadurch aus, dass sie einen Zuckeranteil von weniger als 2 Gew.-% aufweisen und/oder essentiell (kleiner 2 Gew.-%) frei von Sahne sind. Die Produkte können auch einen würzigen Geschmack aufweisen, wie beispielsweise Mayonnaisen oder Aioli.

### GEWERBLICHE ANWENDBARKEIT

Ein weiterer Gegenstand der Erfindung betrifft die Verwendung der texturierten Milchprodukte als Lebensmittel, insbesondere solche, wie sie oben beschrieben werden.

### BEISPIELE

### Beispiel 1

### Herstellung eines hydrokollidfreien Sahnepuddings

10 kg Magermilch mit einem Proteingehalt von 3,5 Gew.-% und einem Fettanteil von weniger als 0,5 Gew.-% wurde bei 25 °C einer Ultrafiltration (Spiralwickelmembran, Trennschärfe 40.000 Dalton) unterworfen. Das Permeat wurde einer anderen Verwendung zugeführt und das Retentat in einen Fermenter überführt, mit beta-Galactosidase *aus Bacillus circulans* im Gewichtsverhältnis Enzym:Substrat von 1:500 versetzt und bei 50 °C gerührt. Der Fortschritt der Transgalactosilierung wurde durch Probennahme verfolgt. Nach etwa 15 Minuten Enzymierungszeit wurde das Viskositätsmaximum erreicht. Das texturierte Milchprodukt wurde anschließend auf 95 °C erhitzt und dort für 6 Minuten belassen. Der Zubereitung wurden unter Zusatzstoffe zugegeben. Das resultierende Endprodukt zeigte zunächst eine cremig-feste Konsistenz, die sich auch bei Lagerung im Kühlschrank bei 7 °C über einen Zeitraum von 2 Wochen nicht veränderte.

### Beispiel 2

### Herstellung eines hydrokollidfreien Sahnepuddings

10 kg Magermilch mit einem Proteingehalt von 3,5 Gew.-% und einem Fettanteil von weniger als 0,5 Gew.-% wurde bei 25 °C einer Ultrafiltration (Spiralwickelmembran, Trennschärfe 40.000 Dalton) unterworfen. Das Permeat wurde einer anderen Verwendung zugeführt und das Retentat in einen Fermenter überführt, mit beta-Galactosidase *aus Bacillus circulans* im Gewichtsverhältnis Enzym:Substrat von 1:500 versetzt und bei 50 °C gerührt. Der Fortschritt der Transgalactosilierung wurde durch Probennahme verfolgt. Nach etwa 15 Minuten Enzymierungszeit wurde das Viskositätsmaximum erreicht. Das texturierte Milchprodukt wurde anschließend für 20 Sekunden auf 134 °C erhitzt. Der Zubereitung wurden unter Zusatzstoffe zugegeben. Das resultierende Endprodukt zeigte zunächst eine festere Konsistent als Beispiel 1, die sich auch bei Lagerung im Kühlschrank bei 7 °C über einen Zeitraum von 2 Wochen nicht veränderte.

### Formulierungsbeispiele

Die beiden Sahnepuddings nach den Beispielen 1 und 2 wurden hinsichtlich Textur, Cremigkeit und Geschmack von 5 Testern gegenüber zwei Produkten des Marktes verkostet, die als Verdickungsmittel Alginat enthielten. Die Ergebnisse sind in **Tabelle 1** wiedergegeben.

**Tabelle 1**

| Formulierungsbeispiele (Mengenangaben als g) | | | | |
|---|---|---|---|---|
| **Komponenten** | **Sahnepudding** | | **Sahnepudding** | |
| | **V1** | **1** | **V2** | **2** |
| Vollmilch | 250 | 250 | 300 | 300 |
| Quark | - | - | - | |
| Sahne | 250 | - | 200 | |
| Texturiertes Milchprodukt 1 | - | - | - | - |
| Texturiertes Milchprodukt 2 | - | 250 | - | 200 |
| Alginat | 35 | - | 40 | - |
| Zucker | 10 | 10 | 10 | 10 |
| Vanillearoma | 0.1 | 0.1 | 0.1 | 0.1 |

| **Verkostung** | | | | |
|---|---|---|---|---|
| Textur | identisch | | identisch | |
| Cremigkeit | identisch | | identisch | |
| Geschmack | Das erfindungsgemäße Produkt war frei von einem metallischen Beigeschmack | | Das erfindungsgemäße Produkt war frei von einem metallischen Beigeschmack | |

## Patentansprüche

1. Texturierte Milchprodukte, dadurch erhältlich oder erhalten durch die folgenden Schritte:
(a) Bereitstellung von Magermilch;
(b) Mikro- und/oder Ultrafiltration der Magermilch aus Schritt (a) unter Erhalt eines Permeats P1 und eines Retentats R1;
(c) Erhitzen des Retentats R1; sowie gegebenenfalls
(d) Zugabe von Hilfs- und Zusatzstoffen.

2. Milchprodukte nach Anspruch 1, **dadurch gekennzeichnet, dass** sie frei von Verdickungsmitteln sind.

3. Milchprodukte nach Anspruch 2, **dadurch gekennzeichnet, dass** sie frei von Hydrokolloiden sind.

4. Verfahren zur Herstellung von texturierten Milchprodukten, umfassend oder bestehend aus den folgenden Schritten:
(a) Bereitstellung von Magermilch;
(b) Mikro- und/oder Ultrafiltration der Magermilch aus Schritt (a) unter Erhalt eines Permeats P1 und eines Retentats R1;
(c) Erhitzen des Retentats R1; sowie gegebenenfalls
(d) Zugabe von Hilfs- und Zusatzstoffen.

5. Verfahren nach Anspruch 4, **dadurch gekennzeichnet, dass** man die Magermilch vor der Mikro- und/oder Ultrafiltration einem Konzentrierungsschritt unterwirft.

6. Verfahren nach mindestens einem der Ansprüche 4 und/oder 5, **dadurch gekennzeichnet, dass** man
- die Mikrofiltration mit Membranen durchführt, die einen Porendurchmesser von etwa 50.000 bis etwa 100.000 Dalton und/oder
- die Ultrafiltration mit Membranen durchführt, die einen Porendurchmesser von 1.000 bis 50.000 Dalton
aufweisen.

7. Verfahren nach den mindestens einem der Ansprüche 4 bis 6, **dadurch gekennzeichnet, dass** man die Mikro- und/oder Ultrafiltration bei einer Temperatur von etwa 10 bis etwa 60 °C durchführt.

8. Verfahren nach mindestens einem der Ansprüche 4 bis 7, dass man dem Retentat R2 vor der Entkeimung mindestens eine beta-Galactosidase zusetzt.

9. Verfahren nach Anspruch 8, **dadurch gekennzeichnet, dass** man beta-Galactosidasen zusetzt, die aus *Aspergillus oryzae, Bacillus circulans* oder Mischungen von beiden gewonnen werden.

10. Verfahren nach Anspruch 8, dass man die beta-Galactosidasen vorzugsweise dann zugibt, wenn der Proteingehalt in der Trockenmasse des Retentats R1 kleiner oder gleich 15 Gew.-% beträgt.

11. Verfahren nach mindestens einem der Ansprüche 4 bis 10, **dadurch gekennzeichnet, dass** das Erhitzen bei einer Temperatur im Bereich von etwa 70 bis etwa 150 °C durchgeführt.

12. Verfahren nach mindestens einem der Ansprüche 4 bis 11, **dadurch gekennzeichnet, dass** man die Entkeimung über einen Zeitraum von etwa 10 Sekunden bis etwa 10 min durchführt.

13. Verfahren nach mindestens einem der Ansprüche 4 bis 12, **dadurch gekennzeichnet, dass** man die texturierten Milchprodukte abschließend einem Konfektionierungsschritt unterwirft.

14. Verfahren nach mindestens einem der Ansprüche 4 bis 13, **dadurch gekennzeichnet, dass** man den texturierten Milchprodukte Hilfs- und Zusatzstoffe zusetzt, die ausgewählt sind aus der Gruppe, die gebildet wird von pflanzlichen Proteinen, pflanzlichen Fetten, Stärkeprodukten, Ballaststoffen, Aromastoffen, Prebiotika, Probiotika, Genusssäuren, Lab, Salzen und Farbstoffen sowie deren Gemischen.

15. Verwendung der texturierten Milchprodukte nach Anspruch 1 oder der Produkte erhalten bzw. erhältlich nach dem Verfahren nach Anspruch 4 als Lebensmittel.
